# EUROPÄISCHE PATENTSCHRIFT

(11) **EP 3 137 342 B1**
(45) Veröffentlichungstag und Bekanntmachung des Hinweises auf die Patenterteilung: **20.02.2019**
(21) Anmeldenummer: 15712266.4
(22) Anmeldetag: 10.03.2015
(51) Int. Cl.: B60R 16/03

(54) **VORRICHTUNG ZUR VERSORGUNG ZUMINDEST EINES VERBRAUCHERS**
DEVICE FOR SUPPLYING AT LEAST ONE LOAD
DISPOSITIF D'ALIMENTATION D'AU MOINS UN DISSIPATEUR

(30) Priorität: 30.04.2014 DE 102014208201
(43) Veröffentlichungstag der Anmeldung: 08.03.2017
(73) Patentinhaber: Robert Bosch GmbH, 70442 Stuttgart (DE)
(72) Erfinder: MUELLER, Wolfgang, 70439 Stuttgart (DE); BOHNE, Christian, 70437 Stuttgart (DE)
(86) Internationale Anmeldenummer: PCT/EP2015/054941
(87) Internationale Veröffentlichungsnummer: WO 2015/165629

(56) Entgegenhaltungen:
- EP-A2- 1 093 974
- WO-A2-03/105330
- WO-A2-2011/012428

## Beschreibung

Die Erfindung geht aus von einer Vorrichtung zur Versorgung zumindest eines Verbrauchers nach der Gattung des unabhängigen Anspruchs. Eine gattungsgemäße Vorrichtung ist bereits aus der WO 2002/080334 A1 bekannt. So sind in einem Ausführungsbeispiel mit einem integrierten Startergenerator eine 36V-Batterie, eine 12V-Batterie sowie ein Doppelschichtkondensator vorgesehen. Der integrierte Starter-Generator versorgt über die Verbindung das 42V-Bordnetz und über einen 42/14V-Konverter das 14V-Netz. An den Netzen sind Verbraucher angeschlossen. Der Doppelschichtkondensator kann über Schalter mit dem integrierten Starter-Generator und dem 42V-Bordnetz verbunden werden. Allerdings wird der Doppelschicht-Kondensator nur über geringe Spannungsbereiche eingesetzt. Eine gattungsgemäße Vorrichtung ist auch aus der DE 102007037937 A1 bekannt.

Die Druckschrift WO 03/105330 beschreibt eine Anordnung zur Spannungsversorgung mehrerer Verbraucher sowie ein Steuergerät für ein mindestens zwei Energiespeicher umfassendes Bordnetz. Sicherheitsrelevante Verbraucher können wahlweise von zwei Teilkreisen, die jeweils einen Energiespeicher beinhalten, versorgt werden.

Es ist Aufgabe der vorliegenden Erfindung, eine Vorrichtung anzugeben, um insbesondere sicherheitsrelevante Verbraucher zuverlässig mit elektrischer Energie zu versorgen. Diese Aufgabe wird gelöst durch die Merkmale des unabhängigen Anspruchs.

### Vorteile der Erfindung

Die erfindungsgemäße Vorrichtung gemäß den Merkmalen des unabhängigen Anspruchs hat dem gegenüber den Vorteil, dass eine zuverlässige Versorgung insbesondere eines sicherheitsrelevanten Teilbordnetzes erfolgt. Dadurch, dass zumindest ein Funktionsmodul vorgesehen ist, das Basis-Bordnetz und/oder das Teilnetz und/oder einen weiteren Energiespeicher koppeln kann, können zuverlässig gerade sicherheitsrelevante Verbraucher in besonders flexibler Art und Weise versorgt werden. Bevorzugt werden hierzu Verbraucher in Verbrauchergruppen mit unterschiedlicher Sicherheitsrelevanz eingeteilt. Die Erfindung kann zur elektrischen Versorgung von Kraftfahrzeugen eingesetzt werden. Weiterhin ist auch der Einsatz in anderen Technikbereichen möglich, in denen elektrische Verbraucher mit hoher Zuverlässigkeit versorgt werden müssen. Zudem sorgt die Erfindung dafür, dass elektrische Speicher mit verschiedenen Spannungslagen, wie beispielsweise Doppelschichtkondensatoren innerhalb eines Bordnetzes betrieben werden können. Außerdem verhindert die erfindungsgemäße Vorrichtung, dass sicherheitsrelevante und spannungssensitive Verbraucher durch einen Spannungseinbruch in ihrer Funktion beeinflusst werden. Die erfindungsgemäße Vorrichtung zeichnet sich darüber hinaus insbesondere dadurch aus, dass eine zweikanalige, elektrische Versorgung für redundante, sicherheitsrelevante Verbraucher möglich wird. Ebenfalls kann eine fehlertolerante Versorgung für sicherheitsrelevante Verbraucher erfolgen, die nur einfach vorhanden sind. Die Konfigurierbarkeit der elektrischen Versorgung im Fehlerfall ist möglich.

Die Anordnung zeichnet sich durch eine hohe Flexibilität aus. Unterschiedlichste Betriebszustände lassen sich optimieren. So können Verbraucher oder Verbrauchergruppen im Fehlerfall abgekoppelt werden. Weiterhin ist es möglich, dass verschiedene elektrische Energiespeicher in einem Bordnetz über eine galvanische Trennung betrieben werden können. Außerdem kann eine Kompensation von Spannungseinbrüchen bei spannungssensitiven Verbrauchern erfolgen. Die Bordnetzstützung beim Betrieb von Hochlastverbrauchern mit hoher Stromdynamik ist außerdem gewährleistet. Ein skalierbarer und modularer Aufbau der Vorrichtung trägt zu Kostensenkungen bei. Weiterhin kann die Vorrichtung als Sonderausstattung insbesondere in einem Fahrzeug implementiert werden. In zweckmäßigen Weiterbildungen sind unterschiedliche Betriebsweisen der Vorrichtung möglich. Dadurch werden weitere Zusatzfunktionen generiert. So kann die Vorrichtung beispielsweise bei geeigneter Ansteuerung das Speichermanagement des Energiespeichers, beispielsweise ein Doppelschicht-Kondensator, übernehmen. Dieser Energiespeicher kann mit Hilfe der Vorrichtung unabhängig von der Generatorspannung oder der Spannung des Energiespeichers des Basis-Bordnetzes geladen oder entladen werden.

In einer zweckmäßigen Weiterbildung stellt die entsprechende Ansteuerung sicher, dass entweder nur das Basis-Bordnetz oder nur das Teilnetz oder aber das gesamte Fahrzeug-Bordnetz zur Verhinderung eines Spannungseinbruchs beispielsweise während des Startvorgangs gestützt werden können.

In einer zweckmäßigen Weiterbildung ist vorgesehen, dass eine Abkopplung des sicherheitsrelevanten Teilnetzes vom Basis-Bordnetz erfolgt und die Versorgung aus dem Energiespeicher sichergestellt wird. Dies erhöht die Sicherheit im Fehlerfall.

In einer zweckmäßigen Weiterbildung ist vorgesehen, dass bei einer entsprechenden Ansteuerung die Abkopplung des Teilnetzes und die Stützung des Basis-Bordnetzes aus dem Energiespeicher erfolgen können. Dies kann insbesondere dann notwendig werden, wenn bei einem Verbraucher in Kurzschluss aufgetreten ist.

In einer zweckmäßigen Weiterbildung ist vorgesehen, dass der Energiespeicher vom sicherheitsrelevanten Teilnetz abgekoppelt wird und die Versorgung des sicherheitsrelevanten Teilnetzes aus dem Basis-Bordnetz über eine direkte galvanische Kopplung erfolgen kann. Dadurch erhöht sich weiter die Sicherheit der Anordnung.

In einer zweckmäßigen Weiterbildung ist vorgesehen, dass die Versorgung des sicherheitsrelevanten Teilnetzes aus dem Basis-Bordnetz über den Gleichspannungswandler zur Spannungsanpassung erfolgen kann. Damit werden spannungskritische Verbraucher in besonders geeigneter Art und Weise versorgt.

In einer zweckmäßigen Weiterbildung ist vorgesehen, dass das gesamte Bordnetz aus dem Energiespeicher gestützt wird ohne Verwendung eines Gleichspannungswandlers. Dies trägt ebenfalls zur Erhöhung der Verfügbarkeit des Gesamtbordnetzes bei.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung zum Verbinden eines Basis-Bordnetzes mit einem sicherheitsrelevanten Teilnetz ist in der Zeichnung dargestellt und wird nachfolgend näher erläutert. Es zeigen:
- Figur 1: ein Blockschaltbild der beispielhaften Ausgestaltung des Basis-Bordnetzes, welches durch ein Multifunktionsmodul mit dem sicherheitsrelevanten Teilnetz verbunden ist mit der entsprechenden Ansteuerung der Verbraucher,
- Figur 2: das Multifunktionsmodul in einem Zustand, in dem der Energiespeicher aufgeladen wird und das Teilnetz direkt mit dem Basis-Bordnetz gekoppelt ist,
- Figur 3: das Multifunktionsmodul in einem Zustand, in dem es das Basis-Bordnetz und das Teilnetz aus dem Energiespeicher stützt,
- Figur 4: das Multifunktionsmodul in einem Zustand, in dem es die Versorgung des Teilnetzes nur aus dem Energiespeicher sicherstellt,
- Figur 5: das Multifunktionsmodul in einem Zustand, in dem das Teilnetz abgekoppelt ist und das Basis-Bordnetz durch den Energiespeicher gestützt wird,
- Figur 6: das Multifunktionsmodul in einem Zustand, in dem das Teilnetz abgekoppelt ist und der Energiespeicher aus dem Basis-Bordnetz aufgeladen wird,
- Figur 7: das Multifunktionsmodul in einem Zustand, in dem es das Teilnetz nur aus dem Basis-Bordnetz stützt,
- Figur 8: das Multifunktionsmodul in einem Zustand, in dem es das Basis-Bordnetz direkt mit dem Energiespeicher stützt,
- Figur 9: das Multifunktionsmodul in einem Zustand, in dem das Basis-Bordnetz und das Teilnetz direkt mit dem Energiespeicher gestützt werden,
- Figur 10: das Multifunktionsmodul in einem Zustand, in dem sie das Teilnetz nur aus dem Basis-Bordnetz stützt, sowie
- Figur 11: ein Blockschaltbild einer alternativen Ausgestaltung der Topologie nach Figur 1, wobei das Basis-Bordnetz mit einem Hochvolt-Bordnetz gekoppelt ist.

Ein Basis-Bordnetz 10 umfasst zumindest einen Starter 12, einen Generator 14, einen Energiespeicher 16 sowie beispielhaft angedeutet einen Verbraucher 18, welcher als sogenannter Komfort-Verbraucher ausgeführt ist. Starter 12, Generator 14, Energiespeicher 16 und Verbraucher 18 sind jeweils parallel zueinander gegen Masse geschaltet. Diese Komponenten sind Bestandteil eines Basis-Bordnetzes 10, welches beispielsweise im Kraftfahrzeug bei 14V betrieben wird. Sicherheitsrelevante Verbraucher 22, 24 werden in geeigneter Art und Weise wie nachfolgend beschrieben in einem sicherheitsrelevanten Teilnetz 20 so verschaltet, dass zuverlässig auch im Fehlerfall eine Energiezufuhr für sicherheitsrelevante Verbraucher 22, 24 erfolgt. Das sicherheitsrelevante Teilnetz 20 lässt sich unterteilen in ein erstes sicherheitsrelevantes Teilnetz 20a, das aus dem Multifunktionsmodul 30 über einen zweiten Pfad 23 gespeist wird und über ein Schaltmittel 26 vom Basisbordnetz 10 abkoppelbar ist. Ein zweites sicherheitsrelevantes Teilnetz 20b als weiterer Bestandteil des sicherheitsrelevanten Teilnetzes 20b ist über einen ersten Pfad 21 unmittelbar mit dem Basis-Bordnetz 10 verbunden. Besonders wesentliche Verbraucher 22 werden redundant ausgelegt. Die redundanten Verbraucher 22a, 22b sind jeweils gegen Masse verschaltet. Der redundante Verbraucher 22b wird über den ersten Pfad 21 unmittelbar von dem Basis-Bordnetz 10 versorgt und ist Bestandteil des zweiten sicherheitsrelevanten Teilnetzes 20b. Der andere redundante Verbraucher 22a als Bestandteil des sicherheitsrelevanten Teilnetzes 20 wird über ein Multifunktionsmodul 30 versorgt. Das Multifunktionsmodul 30 ist über einen Verbindungspfad 11 mit dem Basis-Bordnetz 10 verbunden. Das sicherheitsrelevante Teilnetz 20a ist über den zweiten Pfad 23 mit dem Multifunktionsmodul 30 verbunden. Weiterhin ist ein fehlertolerant zu versorgender Verbraucher 24 in dem Teilnetz 20 vorgesehen, der jedoch nicht redundant ausgelegt ist. Eine geeignete Anordnung der Schaltmittel 26, 28 stellt sicher, dass sowohl der fehlertolerant zu versorgende Verbraucher 24 wie auch der erste redundante Verbraucher 22a sowohl über das Basis-Bordnetz 10 als auch durch das Multifunktionsmodul 30 versorgt werden können. Hierzu kann das Schaltmittel 28 den fehlertolerant zu versorgenden Verbraucher 24 mit dem Ausgang des Multifunktionsmoduls 30 verbinden. Das weitere Schaltmittel 26 ist zwischen dem ersten Pfad 21 und dem gemeinsamen Potential von Schaltmittel 28 und fehlertolerant zu versorgenden Verbraucher 24 angeordnet. Ein Anschluss des Multifunktionsmoduls 30 liegt über dem Verbindungspfad 11 auf dem Potential des Basis-Bordnetzes 10, also beispielsweise bei 14V. In dem Multifunktionsmodul 30 ist ein Gleichspannungswandler 33 angeordnet. Der Gleichspannungswandler 32 ist bevorzugt als 3-Wege-Gleichspannungswandler ausgeführt. Ein dritter Ausgang ist verbunden mit einem weiteren Energiespeicher 40. Der Energiespeicher 40 ist gegen Masse verschaltet. Als Energiespeicher 40 kommt beispielsweise ein Doppelschicht-Kondensator oder eine Batterie mit einem geeigneten Spannungsverhalten zum Einsatz.

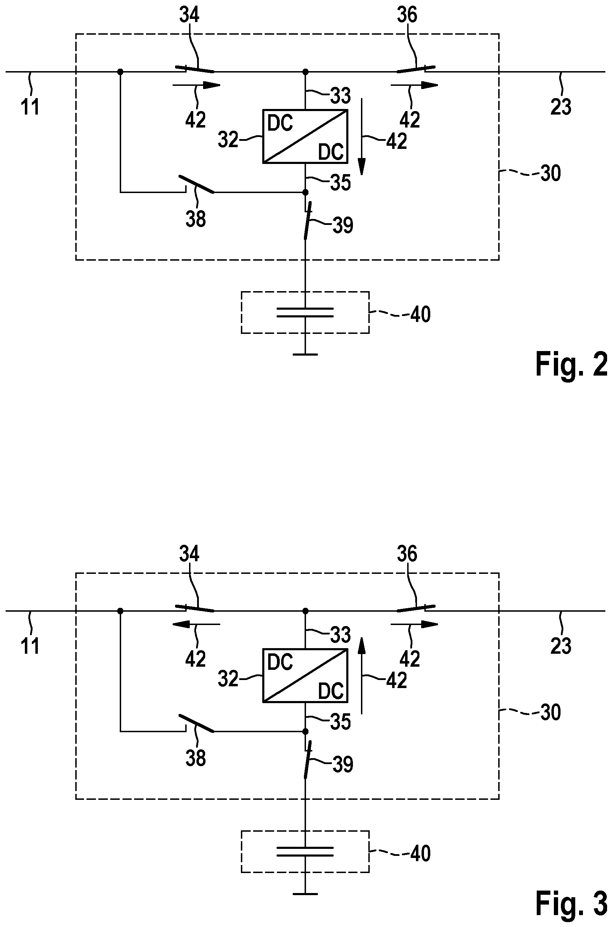

In der Figur 2 ist der Aufbau des Multifunktionsmoduls 30 näher gezeigt. In dem Multifunktionsmodul 30 sind ein erstes Schaltmittel 34 und ein zweites Schaltmittel 36 vorgesehen, die in Reihe geschaltet sind. Zwischen dem ersten Schaltmittel 34 und dem zweiten Schaltmittel 36 ist ein Anschluss 33 des Gleichspannungswandlers 32 kontaktiert. Ein weiterer Anschluss 35 des Gleichspannungswandlers 32 kann über ein viertes Schaltmittel 39 mit dem Energiespeicher 40 verbunden werden. Das erste Schaltmittel 34 kann die Verbindung zwischen dem Gleichspannungswandler 32 und dem Basis-Bordnetz 10 über den Verbindungspfad 11 herstellen. Das zweite Schaltmittel 36 kann über den zweiten Pfad 23 die Verbindung zwischen dem Gleichspannungswandler 32 und dem Teilnetz 20 herstellen. Darüber hinaus ist ein drittes Schaltmittel 38 zwischen dem Basis-Bordnetz-seitigen Eingang des Multifunktionsmoduls 30, nämlich dem Verbindungspfad 11, und dem weiteren Anschluss 35 des Gleichspannungswandlers 32 vorgesehen.

Das Ausführungsbeispiel gemäß Figur 2 zeigt einen Zustand, in dem der Energiespeicher 40 aufgeladen wird. Hierzu sind das erste Schaltmittel 34 und das vierte Schaltmittel 39 geschlossen. Ein Energiefluss 42, der über einen entsprechenden Pfeil angedeutet ist, soll symbolisieren, dass das Basis-Bordnetz 10 Energie über den Gleichspannungswandler 32 hinein in den Energiespeicher 40 zur Verfügung stellt. Der Gleichspannungswandler 32 ist entsprechend ermittelter Strom- und/oder Spannungswerte im Basis-Bordnetz 10 bzw. am Energiespeicher 40 in der Lage, nach ausgewählten Ladestrategien den Energiespeicher 40 auf ein gewünschtes Spannungsniveau zu bringen. Der Energiespeicher 40 kann mit Hilfe des Multifunktionsmoduls 30 unabhängig von der Generatorspannung oder der Spannung am Energiespeicher 16 des Basis-Bordnetzes 10 geladen oder entladen werden. Dies wird sichergestellt durch die geeignete Verwendung des Gleichspannungswandlers 32, denn die Spannung am Energiespeicher 40 kann je nach Ladung stark unterschiedlich zum Basis-Bordnetz 10 sein. In der in Figur 2 gezeigten Ansteuerung der Schaltmittel 34, 36, 38, 39 ist außerdem das ersteTeilnetz 20a, umfassend die sicherheitsrelevanten Verbraucher 22a, 24, direkt mit dem Basis-Bordnetz 10 gekoppelt. Somit erfolgt der Energiefluss 42 aus dem Basis-Bordnetz 10 über das erste Schaltmittel 34, das zweite Schaltmittel 36 auch in das erste Teilnetz 20a.

In Figur 3 ist nun der umgekehrte Betrieb zu Figur 2 zu sehen. Auch dort sind alle Schaltmittel 34, 36, 39 geschlossen bis auf das dritte Schaltmittel 38. Nun allerdings steuert der Gleichspannungswandler 32 den Energiefluss 42 aus dem Energiespeicher 40 sowohl über dem Verbindungspfad 11 in das Basis-Bordnetz 10 wie auch über den zweiten Pfad 23 in das Teilnetz 20a. Somit stützt der Energiespeicher 40 beide Netze 10, 20a. Dies kann beispielsweise vorkommen, wenn durch den Startvorgang des Verbrenners die Spannung kurzfristig auf beispielsweise 9V einbricht, aber sicherheitsrelevante Verbraucher 22, 24 durch diesen Spannungseinbruch nicht in Mitleidenschaft gezogen werden dürfen wie beispielsweise durch einen drohenden Reset. Andere Szenarien sind gleichzeitige Eingriffe von elektrischer Lenkung, elektronisches Stabilitätsprogramm oder elektronische Bremskraftverstärker, welche ebenfalls kurzfristig eine sehr hohe Stromdynamik verursachen können.

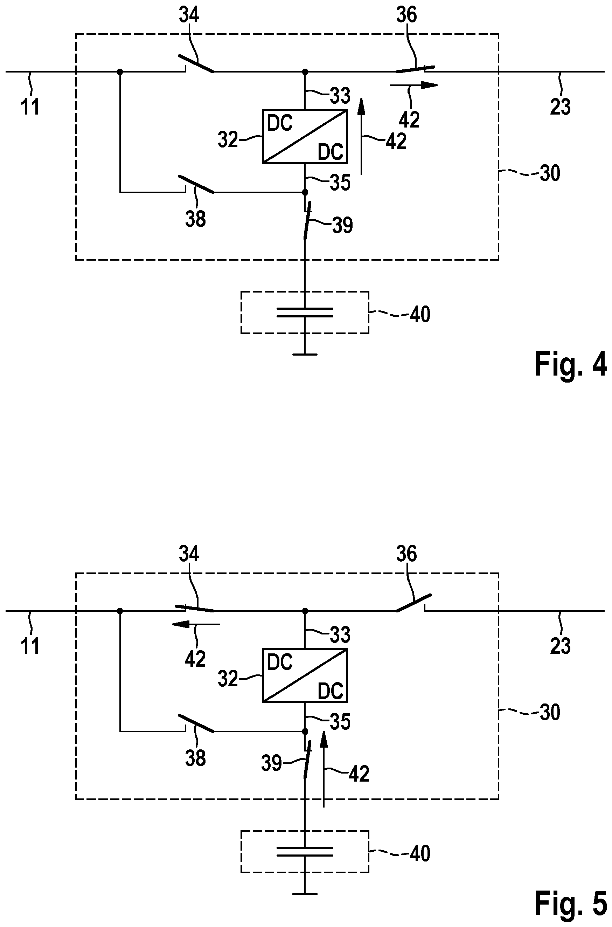

Bei der Ansteuerung gemäß Figur 4 sind nun das erste Schaltmittel 34 und das dritte Schaltmittel 38 geöffnet. Das zweite Schaltmittel 36 sowie das vierte Schaltmittel 39 sind geschlossen. In dieser Betriebsart wird über den zweiten Pfad 23 das erste Teilnetz 20a nur aus dem Energiespeicher 40 versorgt. Hierzu stellt der Gleichspannungswandler 32 die Spannungsverhältnisse so ein, dass ein Energiefluss 42 aus dem Energiespeicher 40 über den Gleichspannungswandler 32 und das geschlossene zweite Schaltmittel 36 nur in das Teilnetz 20 erfolgt. Hier ist es die Aufgabe des Energiespeichers 40, das erste Teilnetz 20a mit sicherheitsrelevanten Verbrauchern 22a, 24 über den Gleichspannungswandler 32 zu versorgen, wenn beispielsweise ein Ausfall oder eine Fehlfunktion des Basis-Bordnetzes 10 erfolgt.

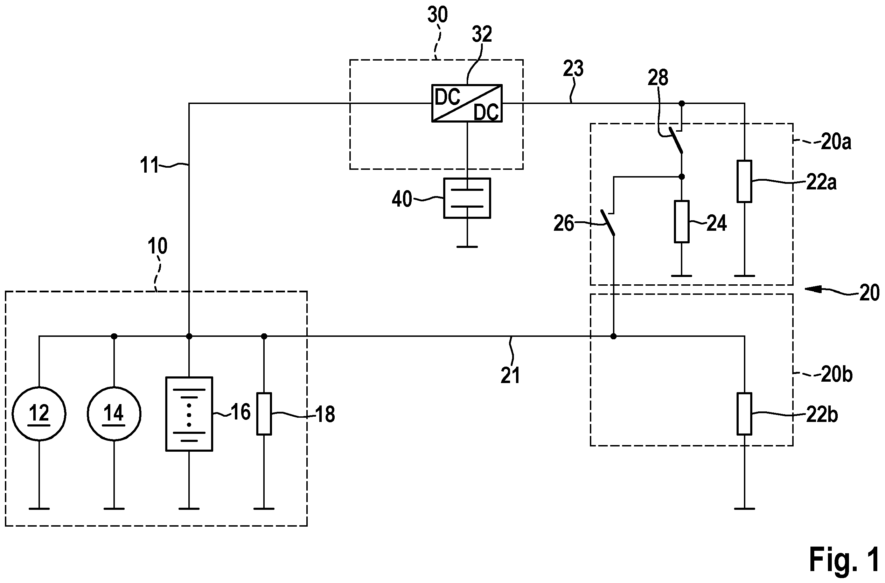

Bei dem Ausführungsbeispiel gemäß Figur 5 ist der Fall gezeigt, dass das erste Teilnetz 20a abgekoppelt werden muss beispielsweise bei einem Kurzschluss in einem Verbraucher 22a, 24 im ersten Teilnetz 20a. Hierzu sind das zweite Schaltmittel 36 und das dritte Schaltmittel 38 geöffnet. Der Energiespeicher 40 stützt über den Gleichspannungswandler 32 das Basis-Bordnetz 10 bzw. kann dies auch beispielsweise bei Ausfall des Generators 14 und/oder des Energiespeichers 16 versorgen. Hierzu ist auch das Schaltmittel 26 aus Figur 1 geschlossen und das Schaltmittel 28 geöffnet, um eine vollständige Abkopplung des ersten Teilnetzes 20a bzw. des zweiten Pfads 23 zu erreichen.

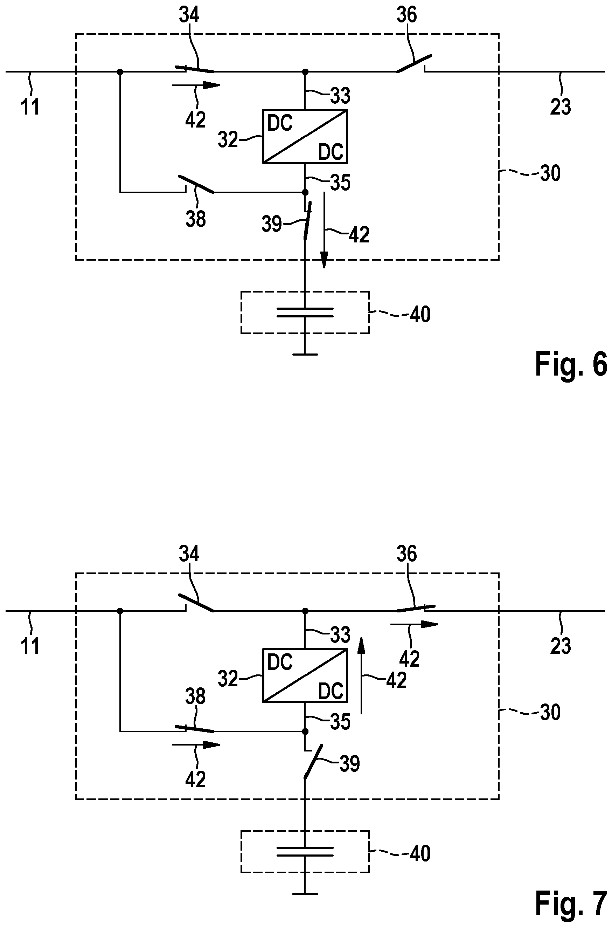

Bei dem Ausführungsbeispiel gemäß Figur 6 sind das erste Schaltmittel 34 und das vierte Schaltmittel 39 geschlossen. Das zweite Schaltmittel 36 und das dritte Schaltmittel 38 sind geöffnet. In diesem Zustand ist der zweite Pfad 23 wiederum abgekoppelt. Der Energiespeicher 40 wird vom Basis-Bordnetz 10 über den Verbindungspfad 11, das erste Schaltmittel 34, den Gleichspannungswandler 32 und das vierte Schaltmittel 39 geladen.

Bei dem Ausführungsbeispiel gemäß Figur 7 sind das erste Schaltmittel 34 und das vierte Schaltmittel 39 geöffnet. Das zweite Schaltmittel 36 und das dritte Schaltmittel 38 sind geschlossen. In dieser Ansteuerung des Multifunktionsmoduls 30 wird der zweite Pfad 23 nur aus dem Basis-Bordnetz 10 gestützt. Dies ist insbesondere für Fälle vorteilhaft, in denen im Basis-Bordnetz 10 eine Unterspannung vorliegt, der Energiespeicher 40 entladen ist, aber der zweite Pfad 23 bzw. das erste Teilnetz 20a mit sicherheitsrelevanten Verbrauchern 22a, 24 mit der Nennspannung versorgt werden muss. Somit läuft der entsprechende Energiefluss 42 aus dem Basis-Bordnetz 10 über das dritte Schaltmittel 38 und den Gleichspannungswandler 32 sowie das zweite Schaltmittel 36 in den zweiten Pfad 23.

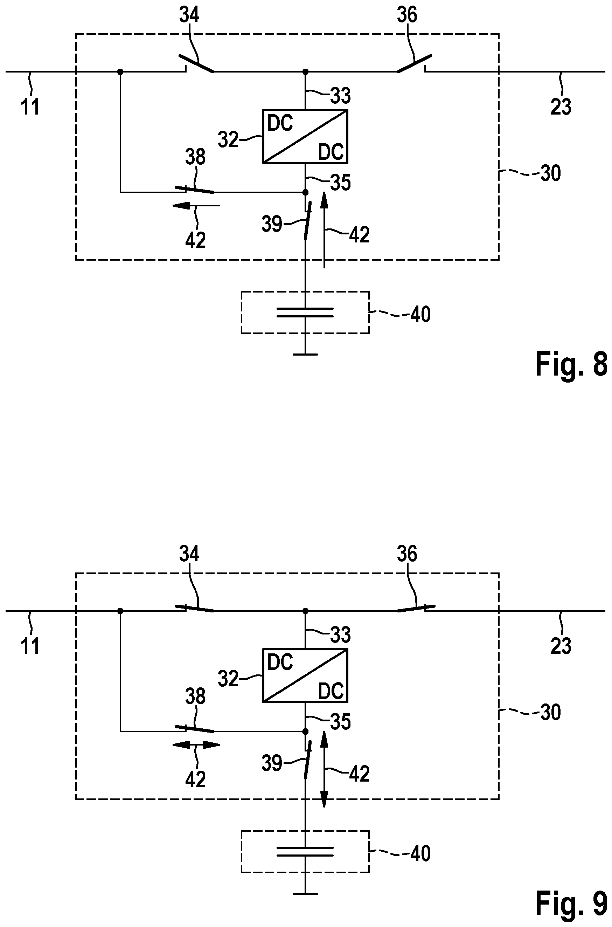

Bei der Ansteuerung des Multifunktionsmoduls 30 gemäß Figur 8 wird das Basis-Bordnetz 10 über den Verbindungspfad 11 direkt durch den Energiespeicher 40 gestützt. Hierzu sind das dritte Schaltmittel 38 und das vierte Schaltmittel 39 geschlossen. Das erste Schaltmittel 34 und zweite Schaltmittel 36 sind geöffnet. Der zweite Pfad 23 ist vom Multifunktionsmodul 30 abgekoppelt. Somit ist das Basis-Bordnetz 10 direkt mit dem Energiespeicher 40 verbunden, ohne den Gleichspannungswandler 32 dazwischen zu schalten. Diese Ansteuerung ist denkbar, wenn die Spannung des Energiespeichers 40 im Bereich des Basis-Bordnetzes 10 liegt und wie oben beschrieben kurzfristige Stromspitzen erwartet werden, welche der Energiespeicher 40 bevorzugt puffern kann, um einen Spannungseinbruch zu verhindern.

Bei der Ansteuerung des Multifunktionsmoduls 30 gemäß Figur 9 können nun sowohl das Basis-Bordnetz 10 als auch das Teilnetz 20 direkt mit dem Energiespeicher 40 gestützt werden. Hierzu sind sämtliche Schaltmittel 34, 36, 38, 39 geschlossen. Allerdings wird der Gleichspannungswandler 32 passiv geschaltet, so dass über den Gleichspannungswandler 32 kein Energiefluss 42 erfolgt. Wiederum ist diese Schaltstellung denkbar, wenn die Spannung des Energiespeichers 40 im Bereich des Basis-Bordnetzes 10 liegt und kurzfristige Stromspitzen erwartet werden, welche der Energiespeicher 40 puffern kann, um einen Spannungseinbruch zu verhindern.

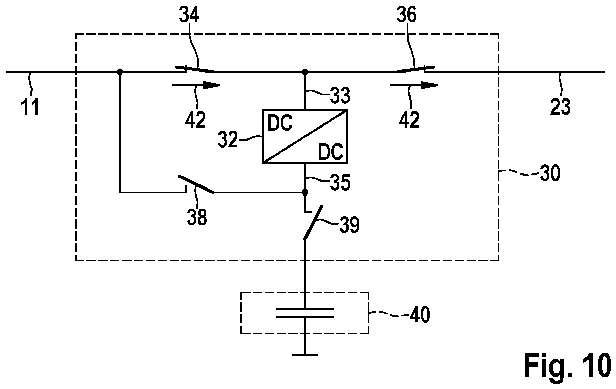

Bei der Ansteuerung der Multifunktionsmoduls 30 gemäß Figur 10 wird das erste Teilnetz 20a bzw. der zweite Pfad 23 nur aus dem Basis-Bordnetz 10 gestützt. Hierzu sind das erste Schaltmittel 34 und das zweite Schaltmittel 36 geschlossen. Das dritte Schaltmittel 38 und das vierte Schaltmittel 39 sind geöffnet. Somit stellt das Basis-Bordnetz 10 einen Energiefluss 42 in Richtung des Teilnetzes 20 zur Verfügung. Das Teilnetz 20 ist also direkt galvanisch mit dem Basis-Bordnetz 10 gekoppelt, das Multifunktionsmodul 30 bzw. der entsprechende Gleichspannungswandler 32 ist abgekoppelt. Hierzu wird der Gleichspannungswandler 32 inaktiv geschaltet, so dass kein Energiefluss 42 über den Gleichspannungswandler 32 erfolgt.

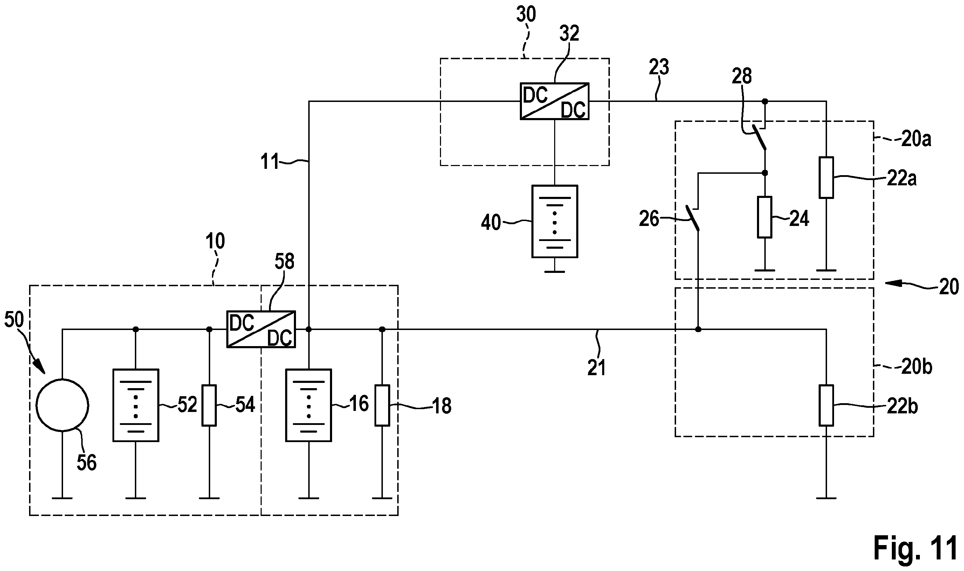

Das Ausführungsbeispiel gemäß Figur 11 ergänzt das der Figur 1 um ein Hochvolt-Bordnetz 50, das ein gegenüber dem Basis-Bordnetz 10 erhöhtes Spannungsniveau, beispielsweise 48V aufweist. Das Hochvolt-Bordnetz 50 weist einen Hochvolt-Energiespeicher 52 und beispielhaft dargestellt einen Hochvolt-Verbraucher 52 wie beispielsweise Heizung, Klimatisierung oder ähnliches auf. Außerdem kann das Hochvolt-Bordnetz 50 eine Elektromaschine 56 (z.B. für ein Elektrofahrzeug, ein Hybridfahrzeug oder ein mit einem rückspeise- und antriebsunterstützenden Elektromotor als Teil eines sog. Boost Recuperation Systems (BRS)) umfassen. Das Hochvolt-Bordnetz 50 ist über einen weiteren Gleichspannungswandler 58 mit dem Basis-Bordnetz 10 verbindbar. Das Hochvolt-Bornetz 50 kann somit ebenfalls über den Verbindungspfad 11 das Multifunktionsmodul 30 bzw. den zweiten Pfad 23 versorgen. An der Betriebsweise des Multifunktionsmoduls 30 ändert sich jedoch im Prinzip nichts.

Beispielhaft wurde die Vorrichtung am Beispiel eines 14V-Basis-Bordnetzes 10 dargestellt. Alternativ kann der Generator 14 auch durch eine sowohl motorische als auch generatorisch betreibbare elektrische Maschine ersetzt werden. Im Basis-Bordnetz 10 können darüber hinaus auch andere Komponenten vorgesehen sein, die eine andere Spannungshöhe bzw. auch eine andere Struktur besitzen. Das Teilnetz 20 wird bevorzugt auf demselben Spannungsniveau wie das Teilbordnetz 10 betrieben. Wesentlich hierbei ist, dass eine zuverlässige Versorgung der sicherheitsrelevanten Komponenten 22, 24 sichergestellt wird selbst bei einer Vielzahl oben beschriebener Fehlersituationen. Es hat sich gezeigt, dass bei dem beschriebenen Aufbau des Multifunktionsgeräts 30 eine Reihe die Qualität des Bordnetzes verbessernder Betriebszustände möglich sind, wobei in jedem Fall eine zuverlässige Versorgung der sicherheitsrelevanten Verbraucher 22, 24 sichergestellt werden kann.

Durch die beschriebene Vorrichtung wird es möglich, dass eine skalierbare und modulare Bordnetz-Topologie zur Versorgung von sicherheitsrelevanten elektrischen Verbrauchern 22, 24 realisiert wird.

Die Verbraucher werden in Verbrauchergruppen mit unterschiedlicher Sicherheitsrelevanz eingeteilt (vgl. redundante Verbraucher 22a, 22b; fehlertolerant zu versorgende Verbraucher 24, welche jedoch nicht redundant auszuführen sind). Das sicherheitsrelevante Teilnetz 20 besteht aus dem ersten Teilnetz 20a, das zumindest über das Schaltmittel 26 und das Multifunktionsmodul 30 von dem Basis-Bordnetz 10 abkoppelbar ist. Weiterhin besteht das sicherheitsrelevante Teilnetz 20 aus dem zweiten Teilnetz 20b, das über den ersten Pfad 21 immer mit dem ersten Basis-Bordnetz 10 gekoppelt ist. In diesem zweiten Teilnetz 20b sind sicherheitsrelevante Verbraucher 22b enthalten, die bevorzugt redundant ausgelegt sind.

Bevorzugt kann die Vorrichtung im Kraftfahrzeugbereich eingesetzt werden. Weiterhin ist auch ein Einsatz in anderen Technikbereichen möglich, in denen elektrische Verbraucher mit hoher Zuverlässigkeit versorgt werden müssen. Außerdem sorgt die Vorrichtung dafür, dass elektrische Speicher 16, 40 mit unterschiedlichen Spannungslagen, insbesondere bei Doppelschicht-Kondensatoren innerhalb eines Bordnetzes betrieben werden können. Außerdem wird verhindert, dass sicherheitsrelevante und spannungssensitive Verbraucher durch einen Spannungseinbruch in ihrer Funktion beeinträchtigt werden. Außerdem stellt die beschriebene Topologie eine zweikanalige elektrische Versorgung der redundanten, sicherheitsrelevanten Verbraucher 22, 24 sicher. Ebenfalls ist eine fehlertolerante Versorgung für sicherheitsrelevante Verbraucher 24, welche nur einfach vorhanden sind, möglich. Die elektrische Versorgung lässt sich im Fehlerfall flexibel konfigurieren. Außerdem können Verbraucher 22, 24 oder Verbrauchergruppen im Fehlerfall abgekoppelt werden. Der Betrieb von verschiedenen elektrischen Energiespeichern 16, 40 in einem Bordnetz kann über eine galvanische Trennung unter Verwendung des Gleichspannungswandlers 32 vorgenommen werden. Außerdem können Spannungseinbrüche flexibel kompensiert werden für spannungssensitive Verbraucher. Außerdem wird eine Stützung des Bordnetzes bei Betrieb von Hochlastverbrauchern mit hoher Stromdynamik gewährleistet.

Bei den beschriebenen Schaltmitteln 26, 28, 34, 36, 38, 39 kann es sich beispielsweise um Halbleiterschalter oder konventionelle Relais handeln. Besonders bevorzugt könnten auch entsprechende Schaltelemente, welche bereits Bestandteil des Gleichspannungswandlers 32 sind, bei entsprechender Verschaltung verwendet werden, um die Kopplung von Basis-Bordnetz 10 und/oder Teilnetz 20 und/oder Energiespeicher 40 vorzunehmen. Dadurch könnten in Summe die Anzahl der elektronischen Bauelemente des Multifunktionsmoduls 30 verringert werden. Die gezeigten Figuren 2 bis 10 dienen insbesondere der Veranschaulichung der unterschiedlichen Funktionen des Multifunktionsmoduls 30.

Bei dem Energiespeicher 16 handelt es sich beispielsweise um einen konventionellen Blei-Säure-Akku, wie er üblicher Bestandteil eines Basis-Bordnetzes 10 ist. Die Charakteristik des Energiespeichers 40 hingegen ist so zu wählen, dass Spannungseinbrüche bzw. Spannungsspitzen ausgeglichen werden können. Jedoch steht eine zuverlässige Versorgung des Teilbordnetzes 20 auch durch den Energiespeicher 40 im Vordergrund. Als Energiespeicher 40 könnte bevorzugt ein Doppelschichtkondensator (DLC) oder auch ein Lithium-Ionen-Akku Verwendung finden.

Die beschriebene Vorrichtung eignet sich insbesondere in der Verwendung eines Kraftfahrzeug-Bordnetzes, sie ist jedoch hierauf nicht eingeschränkt.

## Patentansprüche

1. Vorrichtung zur Versorgung zumindest eines Verbrauchers, umfassend zumindest ein Basis-Bordnetz (10) mit zumindest einem Energiespeicher (16), mit zumindest einem ersten Pfad (21), der mit dem Basis-Bordnetz (10) verbunden ist, mit zumindest einem zweiten Pfad (23), der mit einem Funktionsmodul (30) verbunden ist mit einem weiteren Energiespeicher (40), mit einem Funktionsmodul (30), das den zweiten Pfad (23) mit dem Basis-Bordnetz (10) und/oder mit dem weiteren Energiespeicher (40) verbinden kann, wobei zumindest ein einfach vorhandener, sicherheitsrelevanter Verbraucher (24) mit dem ersten Pfad (21) und/oder mit dem zweiten Pfad (23) verbunden werden kann, wobei zumindest ein redundanter sicherheitsrelevanter Verbraucher (22b) mit dem ersten Pfad (21) verbunden ist, wobei zumindest ein weiterer redundanter sicherheitsrelevanter Verbraucher (22a) mit dem zweiten Pfad (23) verbunden werden kann, **dadurch gekennzeichnet, dass** zumindest ein Schaltmittel (26, 28) vorgesehen ist zum Verbinden des einfach vorhandenen sicherheitsrelevanten Verbrauchers (24) mit dem ersten Pfad (21) und/oder dem zweiten Pfad (23), und dass die weiteren sicherheitsrelevanten Verbraucher (22a, 22b) redundant ausgeführt sind, wobei der eine der redundanten Verbraucher (22b) über den ersten Pfad (21) mit dem Basis-Bordnetz (10) verbunden ist, während der andere der redundanten Verbraucher (22a) über den zweiten Pfad (23) mit dem weiteren Energiespeicher (40) und/oder dem Basis-Bordnetz (10) verbindbar ist.

2. Vorrichtung Anspruch 1, **dadurch gekennzeichnet, dass** das Funktionsmodul (30) über einen Verbindungspfad (11) mit dem Basis-Bordnetz (10) verbunden ist.

3. Vorrichtung nach einem der vorhergehenden Ansprüche, **dadurch gekennzeichnet, dass** das Funktionsmodul (30) zumindest einen Gleichspannungswandler (32) umfasst zur Erzeugung eines gewünschten Spannungsniveaus zwischen dem weiterem Energiespeicher (40) und/oder Basisbordnetz (10) und/oder dem zweiten Pfad (23).

4. Vorrichtung nach einem der vorhergehenden Ansprüche, **dadurch gekennzeichnet, dass** das Funktionsmodul (30) zumindest ein Schaltmittel (34, 36, 38, 39) umfasst, um den weiteren Energiespeicher (40) dem zweiten Pfad (23) und/oder dem Basis-Bordnetz (10) zuzuschalten.

5. Vorrichtung nach einem der vorhergehenden Ansprüche, **dadurch gekennzeichnet, dass** das Funktionsmodul (30) zur Stützung zumindest des zweiten Pfades (23) einen Energiefluss (42) aus dem Energiespeicher (40) auch über den Gleichspannungswandler (32) in den zweiten Pfad (23) bewirkt.

6. Vorrichtung nach einem der vorhergehenden Ansprüche, **dadurch gekennzeichnet, dass** das Funktionsmodul (30) die Stützung des Basis-Bordnetzes (10) durch den Energiespeicher (40) bewirkt, indem der Energiefluss (42) unmittelbar und/oder über den Gleichspannungswandler (32) in das Basisbordnetz (10) erfolgt.

7. Vorrichtung nach einem der vorhergehenden Ansprüche, **dadurch gekennzeichnet, dass** das Funktionsmodul (30) den Energiespeicher (40) mit dem Basis-Bordnetz (10) und/oder dem zweiten Pfad (23) über den Gleichspannungswandler (32) koppelt zur Spannungsstabilisierung.

8. Vorrichtung nach einem der vorhergehenden Ansprüche, **dadurch gekennzeichnet, dass** zumindest ein Hochvolt-Bordnetz (50) mit einer von dem Basis-Bordnetz (10) abweichenden Bordnetzspannung, das vorzugsweise zumindest einen weiteren Energiespeicher (52) und/oder eine Hochvolt-Elektromaschine (56) und/oder einen Hochvolt-Verbraucher (54) umfasst, das insbesondere über einen Gleichspannungswandler (58) mit dem Basis-Bordnetz (10) und/oder dem Funktionsmodul (30) koppelbar ist.

9. Vorrichtung nach einem der vorhergehenden Ansprüche, **dadurch gekennzeichnet, dass** der eine der redundanten Verbraucher (22 b) über den ersten Pfad (21) mit dem Basis-Bordnetz (10) verbunden ist ohne ein dazwischen angeordnetes Schaltmittel.

## Claims

1. Apparatus for supplying power to at least one load, comprising at least one basic vehicle power supply system (10) having at least one energy store (16), having at least one first path (21), which is connected to the basic vehicle power supply system (10), having at least one second path (23), which is connected to a functional module (30), having a further energy store (40), having a functional module (30), which can connect the second path (23) to the basic vehicle power supply system (10) and/or to the further energy store (40), wherein at least one safety-relevant load (24), which is present only once, can be connected to the first path (21) and/or to the second path (23), wherein at least one redundant safety-relevant load (22b) is connected to the first path (21), wherein at least one further redundant safety-relevant load (22a) can be connected to the second path (23), **characterized in that** at least one switching means (26, 28) is provided to connect the safety-relevant load (24), which is present only once, to the first path (21) and/or to the second path (23), and **in that** the further safety-relevant loads (22a, 22b) are embodied in a redundant manner, wherein one of the redundant loads (22b) is connected to the basic vehicle power supply system (10) via the first path (21) whereas the other redundant load (22a) can be connected to the further energy store (40) and/or to the basic vehicle power supply system (10) via the second path (23).

2. Apparatus according to Claim 1, **characterized in that** the functional module (30) is connected to the basic vehicle power supply system (10) via a connection path (11) .

3. Apparatus according to either of the preceding claims, **characterized in that** the functional module (30) comprises at least one DC voltage converter (32) for generating a desired voltage level between the further energy store (40) and/or the basic vehicle power supply system (10) and/or the second path (23).

4. Apparatus according to one of the preceding claims, **characterized in that** the functional module (30) comprises at least one switching means (34, 36, 38, 39) to connect the further energy store (40) to the second path (23) and/or to the basic vehicle power supply system (10) .

5. Apparatus according to one of the preceding claims, **characterized in that**, to support at least the second path (23), the functional module (30) causes a flow of energy (42) from the energy store (40) into the second path (23) via the DC voltage converter (32) as well.

6. Apparatus according to one of the preceding claims, **characterized in that** the functional module (30) causes the energy store (40) to support the basic vehicle power supply system (10) by virtue of the energy (42) flowing into the basic vehicle power supply system (10) directly and/or via the DC voltage converter (32).

7. Apparatus according to one of the preceding claims, **characterized in that** the functional module (30) couples the energy store (40) to the basic vehicle power supply system (10) and/or the second path (23) via the DC voltage converter (32) for the purpose of voltage stabilization.

8. Apparatus according to one of the preceding claims, **characterized in that** at least one high-voltage vehicle power supply system (50) having a vehicle power supply system voltage that deviates from the basic vehicle power supply system (10), which high-voltage vehicle power supply system preferably comprises at least one further energy store (52) and/or a high-voltage electric machine (56) and/or a high-voltage load (54), which high-voltage vehicle power supply system can be coupled to the basic vehicle power supply system (10) and/or the functional module (30), in particular, via a DC voltage converter (58) .

9. Apparatus according to one of the preceding claims, **characterized in that** one of the redundant loads (22b) is connected to the basic vehicle power supply system (10) via the first path (21) without a switching means arranged in between.

## Revendications

1. Dispositif d'alimentation d'au moins un dissipateur, comprenant au moins un réseau de bord de base (10) qui possède au moins un accumulateur d'énergie (16) avec au moins un premier chemin (21) relié au réseau de bord de base (10) et au moins une deuxième chemin (23) relié à un module fonctionnel (30), qui possède un autre accumulateur d'énergie (40) comportant un module fonctionnel (30) capable de relier le deuxième chemin (23) au réseau embarqué de base (10) et/ou à l'autre accumulateur d'énergie (40), dans lequel au moins un dissipateur (24) simplement présent et intéressant la sécurité peut être relié au premier chemin (21) et/ou au deuxième chemin (23), dans lequel au moins un dissipateur redondant (22b) intéressant la sécurité est relié au premier chemin (21), dans lequel au moins un autre dissipateur redondant (22a) intéressant la sécurité peut être relié au deuxième chemin (23), **caractérisé en ce qu'**il est prévu au moins un moyen de commutation (26, 28) pour relier le dissipateur (24) simplement présent intéressant la sécurité au premier chemin (21) et/ou au deuxième chemin (23), et **en ce que** les autres dissipateurs (22a, 22b) intéressant la sécurité sont réalisés de manière redondante, dans lequel ledit un des dissipateurs redondants (22b) est relié au réseau embarqué de base (10) par l'intermédiaire du premier chemin (21) tandis que l'autre des dissipateurs redondants (22a) peut être relié à l'autre accumulateur d'énergie (40) et/ou au réseau embarqué de base (10) par l'intermédiaire du deuxième chemin (23).

2. Dispositif selon la revendication 1, **caractérisé en ce que** le module fonctionnel (30) est relié au réseau embarqué de base (10) par l'intermédiaire d'un chemin de liaison (11).

3. Dispositif selon l'une des revendications précédentes, **caractérisé en ce que** le module fonctionnel (30) comprend au moins un convertisseur de tension continue (32) destiné à générer un niveau de tension souhaité entre l'autre accumulateur d'énergie (40) et/ou le réseau embarqué de base (10) et/ou le deuxième chemin (23) .

4. Dispositif selon l'une des revendications précédentes, **caractérisé en ce que** le module fonctionnel (30) comprend au moins un moyen de commutation (34, 36, 38, 39) destiné à relier l'autre accumulateur d'énergie (40) au deuxième chemin (23) et/ou au réseau embarqué de base (10).

5. Dispositif selon l'une des revendications précédentes, **caractérisé en ce que**, pour prendre en charge au moins le deuxième chemin (23), le module fonctionnel (30) provoque également le passage d'un flux d'énergie (42) depuis l'accumulateur d'énergie (40), par l'intermédiaire du convertisseur de tension continue (32), vers le deuxième chemin (23).

6. Dispositif selon l'une des revendications précédentes, **caractérisé en ce que** le module fonctionnel (30) fait en sorte que le réseau embarqué de base (10) soit pris en charge par l'accumulateur d'énergie (40) en faisant passer le flux d'énergie (42) vers le réseau embarqué de base (10) directement et/ou par l'intermédiaire du convertisseur de tension continue (32) .

7. Dispositif selon l'une des revendications précédentes, **caractérisé en ce que** le module fonctionnel (30) couple l'accumulateur d'énergie (40) au réseau embarqué de base (10) et/ou au deuxième chemin (23) par l'intermédiaire du convertisseur de tension continue (32) à des fins de stabilisation de la tension.

8. Dispositif selon l'une des revendications précédentes, **caractérisé en ce qu'**au moins un réseau embarqué à haute tension (50) ayant une tension de réseau embarqué dérivée du réseau embarqué de base (10) qui comprend de préférence au moins un autre accumulateur d'énergie (52) et/ou une machine électrique à haute tension (56) et/ou un dissipateur à haute tension (54) qui peut être couplé, notamment par l'intermédiaire d'un convertisseur de tension continue (58), au réseau embarqué de base (10) et/ou au module fonctionnel (30).

9. Dispositif selon l'une des revendications précédentes, **caractérisé en ce que** l'un des dissipateurs redondants (22b) est relié par l'intermédiaire du premier chemins (21) au réseau embarqué de base (10) sans moyen de commutation disposé entre ceux-ci.
